# EUROPÄISCHE PATENTSCHRIFT

(11) **EP 3 388 297 B1**
(45) Veröffentlichungstag und Bekanntmachung des Hinweises auf die Patenterteilung: **22.05.2019**
(21) Anmeldenummer: 18164512.8
(22) Anmeldetag: 28.03.2018
(51) Int. Cl.: B60T 1/10, B60T 8/24, B60T 7/20, B60T 13/66, B60L 7/24, B60W 30/18

(54) **FAHRZEUGANHÄNGER MIT ENERGIERÜCKGEWINNUNGSEINRICHTUNG**
VEHICLE TRAILER WITH ENERGY RECOVERY DEVICE
REMORQUE DE VÉHICULE DOTÉE DE DISPOSITIF DE RÉCUPÉRATION D'ÉNERGIE

(30) Priorität: 03.04.2017 DE 102017107064
(43) Veröffentlichungstag der Anmeldung: 17.10.2018
(73) Patentinhaber: Knott GmbH, D-83125 Eggstätt (DE)
(72) Erfinder: STRASSER, Josef, 83257 Gstadt am Chiemsee (DE)
(74) Vertreter: Flach Bauer Stahl Patentanwälte Partnerschaft mbB

(56) Entgegenhaltungen:
- DE-A1- 2 034 940
- DE-A1-102010 042 907
- DE-A1-102016 009 934
- NL-C1- 1 030 159
- US-A1- 2013 311 058

## Beschreibung

Die Erfindung betrifft einen Fahrzeuganhänger mit einer Energierückgewinnungseinrichtung zur Rückgewinnung von durch Bremsen des Fahrzeuganhängers erzeugten Energie gemäß dem Oberbegriff des Anspruches 1.

Aus der DE 10 2010 042 907 A1 ist ein Fahrzeuganhänger wie beispielsweise Wohnwagen mit einer Energierückgewinnungseinrichtung gemäß dem Oberbegriff des Anspruchs 1 bekannt.Dieser Fahrzeuganhänger weist eine Auflaufbremsanlage, Antriebseinheiten in der Form von Elektromotoren, die auch als Generatoren betrieben werden können, einen Energiespeicher sowie eine elektronische Steuereinrichtung auf, um die Bewegungsenergie beim Bremsen des Fahrzeuganhängers in elektrische Energie umzuwandeln und im Energiespeicher zu speichern. Die Energieumwandlung kann dort in Abhängigkeit der im Bereich der Deichsel auftretenden Schub- oder Zugkraft erfolgen. Die gespeicherte Energie kann beim Beschleunigen des Gespannes das Zugfahrzeug entlasten und so den Kraftstoffverbrauch und den Schadstoffausstoß reduzieren. Auch beim Manövrieren des Anhängers im angekuppelten Zustand kann diese Energie gut genutzt werden. Gleichzeitig kann auch bei schlingerndem Fahrzeuganhänger durch gezielten Bremseingriff das Gespann gestreckt und stabilisiert werden.

Die im Generatorbetrieb in den Antriebseinheiten auftretenden Bremskräfte können zum Abbremsen des Fahrzeuganhängers genutzt werden. Allerdings sind die Bremskräfte des rekuperativen Bremssystems allein meist nicht ausreichend, um bei allen Bedingungen, insbesondere bei starken Abbremsungen, die gesetzlichen Vorgaben zu erreichen. Hierzu wären überdimensionale Generatoren/Motoren notwendig, welche sehr schwer und teuer sind. Dies würde neben hohen Kosten eine extreme Reduktion der Nutzlast des Fahrzeuganhängers bedeuten. Darüberhinaus besteht der Gesetzgeber auf Elemente mit rein mechanischer Wirkung für die Feststellbremse. Ein weiteres Problem bei rekuperativen Bremssystemen besteht darin, dass dann, wenn beispielsweise während einer längeren Passabfahrt der rekuperative Energiespeicher voll geladen ist, dieser keine weitere Energie mehr aufnehmen kann. Die Abführung dieser überschüssigen Energie, beispielsweise über einen Heizwiderstand an die Umgebung, ist jedoch nicht immer in voll umfänglichem Maß möglich. Das zusätzliche Zuspannen der Betriebsbremsen (Reibbremsen) ist mit erheblichem Steuerungsaufwand verbunden. Weiterhin müsste die elektronische Steuereinrichtung aufgrund natürlicher Unebenheiten realer Straßen extrem schnell sein, um die zulässigen Deichselkräfte am Kuppelpunkt zum Zugfahrzeug einzuhalten.

Aus der DE 10 2016 009 934 A1 ist ferner eine Steuereinrichtung zum Deaktivieren eines Bremssystems mit einer Auflaufbremsanlage bekannt, wobei die Steuerung in Abhängigkeit eines vom Zugfahrzeug abgegebenen Rekuperationssignals erfolgt.

Der Erfindung liegt von daher die Aufgabe zugrunde, einen eine Energierückgewinnungseinrichtung aufweisenden Fahrzeuganhänger mit einem Bremssystem gemäß dem Obergriff des Anspruchs 1 zu schaffen, das auch bei Ausfall des rekuperativen Bremssystems und bei starken Bremsungen besonders zuverlässig arbeitet und die Realisierung einer mechanisch wirkenden Feststellbremse auf besonders einfache Weise ermöglicht.

Diese Aufgabe wird erfindungsgemäß durch einen Fahrzeuganhänger mit den Merkmalen des Anspruches 1 gelöst. Vorteilhafte Ausführungsformen der Erfindung sind in den weiteren Ansprüchen beschrieben.

Beim erfindungsgemäßen Fahrzeuganhänger ist eine mit der Zugstange zusammenwirkende Klemmeinrichtung vorgesehen, die bei Vorwärtsfahrt des Fahrzeuganhängers das Einschieben der Zugstange in das Deichselgehäuse bei einer Deichselschubkraft unterhalb eines bestimmten Deichselschubkraftgrenzwertes blockiert und oberhalb dieses Deichselschubkraftgrenzwertes ermöglicht.

Mit Hilfe der Erfindung wird somit ein elektronisches rekuperatives Bremssystem mit einer Auflaufbremsanlage in besonders vorteilhafter Weise kombiniert, indem die Betätigung der Auflaufbremsanlage mittels der Klemmeinrichtung in Abhängigkeit der auftretenden Deichsel- bzw. Kuppelkräfte blockiert oder freigegeben wird. Solange der Fahrzeuganhänger gezogen wird und von der Kraftmesseinrichtung Zugkräfte gemessen werden, ist die Klemmung der Auflaufbremsanlage deaktiviert, d.h. die elektronische Steuereinrichtung steuert die Klemmeinrichtung derart an, dass keine oder nur vernachlässigbare Klemmkräfte auf die Zugstange ausgeübt werden. Beim Bremsen des Zugfahrzeugs treten dagegen in der Deichsel Schubkräfte auf. Wird von der Kraftmesseinrichtung, die insbesondere im Bereich eines Kupplungsgehäuses einer Kugelkopfkupplung angeordnet sein kann, eine axiale Schubkraft erkannt, die unterhalb einer bestimmten Deichselschubkraft (hier Deichselschubkraftgrenzwert genannt) liegt und beispielsweise 2 bis 4% der Anhängergewichtskraft betragen kann, wird die Klemmeinrichtung mittels der elektronischen Steuereinrichtung derart aktiviert, dass die Zugstange durch die auflaufende Masse des Fahrzeuganhängers nicht mehr in das Deichselgehäuse eingeschoben werden kann. Die Auflaufbremsanlage, die in üblicher Weise ausgestaltet sein kann und die Einschubbewegung der Zugstange üblicherweise über ein Bremsgestänge, Bremsseile, hydraulisch oder pneumatisch auf die Radbremsen (Reibbremsen) überträgt, wird damit blockiert, so dass die Radbremsen unterhalb dieses Deichselschubkraftgrenzwertes mittels der Auflaufbremsanlage nicht zugespannt werden können. Das Bremsen des Fahrzeuganhängers erfolgt in diesem Fall ausschließlich über die Rekuperationsbremse, d.h. über die Bremswirkung der in den Generatormodus geschalteten Energierückgewinnungseinrichtung.

Überschreitet bei einer starken Bremsung die in der Deichsel auftretende Schubkraft den Deichselschubkraftgrenzwert, ermöglicht die Klemmeinrichtung dagegen das Einschieben der Zugstange in das Deichselgehäuse, so dass die Radbremsen über die Auflaufbremsanlage zugespannt werden können. Die Bremswirkung der Rekuperationsbremse wird in diesem Fall somit durch die Radbremsen unterstützt.

Mit Hilfe der Erfindung kann somit eine hohe Bremssicherheit bei einem Ausfall der Rekuperationsbremse oder bei deren Abschaltung im Fall eines vollen Energiespeichers erreicht werden. Da die vorzugsweise mechanisch oder hydraulisch wirkende Auflaufbremsanlage zusätzlich zum rekuperativen Bremssystem vorhanden ist, kann die Auflaufbremsanlage jederzeit das Bremsen des Fahrzeuganhängers übernehmen, wenn das rekuperative Bremssystem ausfällt oder abgeschaltet wird. Bei starken Verzögerungen, d.h. wenn der Deichselschubkraftgrenzwert überschritten wird, übernimmt die Auflaufbremsanlage automatisch entweder teilweise oder vollständig die Bremsarbeit für den Fahrzeuganhänger. Weiterhin lässt sich eine mechanisch wirkende Feststellbremse auf besonders einfache und kostengünstige Weise realisieren, da diese bereits Teil einer üblichen Auflaufbremsanlage ist.

Vorzugsweise liegt der Deichselschubkraftgrenzwert bei einer Deichselschubkraft, die 2 bis 4% der Gewichtskraft des Fahrzeuganhängers entspricht. Andere Deichselschubkraftgrenzwerte, bis zu welcher die Klemmeinrichtung das Einschieben der Zugstange in das Deichselgehäuse blockiert, sind jedoch ohne weiteres möglich. Beispielsweise kann der Deichselschubkraftgrenzwert auch in einem Bereich liegen, der zwischen 1 und 6% der Gewichtskraft des Fahrzeuganhängers liegt.

Gemäß einer besonders vorteilhaften Ausführungsform ist die Klemmeinrichtung derart ausgebildet und mit der Zugstange in Reibungseingriff, dass unterhalb des Deichselschubkraftgrenzwertes ein Einschieben der Zugstange in das Deichselgehäuse aufgrund der Haftreibung zwischen mindestens einem Reibelement und der Zugstange blockiert ist, während bei Überschreiten des Deichselschubkraftgrenzwertes das Einschieben der Zugstange in das Deichselgehäuse durch Überwinden der Haftreibung ermöglicht wird. In diesem Fall werden die Radbremsen über die Auflaufbremsanlage immer dann automatisch betätigt, wenn die axiale Schubkraft in der Zugstange größer als die Haftreibung zwischen Klemmeinrichtung und Zugstange ist. Alternativ hierzu ist es jedoch auch möglich, die Klemmeinrichtung derart auszubilden, dass sie die Einschubbewegung der Zugstange in das Deichselgehäuse mittels Sperrelementen blockiert, die in Abhängigkeit der Deichselschubkräfte in und außer formschlüssigen Sperreingriff mit der Zugstange bringbar sind.

Vorteilhafterweise umfasst die Klemmeinrichtung mindestens ein Reibelement, das in axialer Richtung der Zugstange am Deichselgehäuse abgestützt ist, und eine Krafterzeugungseinrichtung, mit der das Reibelement in Reibkontakt mit der Zugstange bringbar ist. Die Krafterzeugungseinheit presst in diesem Fall in Abhängigkeit der Signale, die sie von der elektronischen Steuereinrichtung erhält, das Reibelement mit einer vorbestimmten Anpresskraft gegen die Zugstange, um die gewünschte Reibkraft zu erzeugen.

Es ist jedoch auch ohne weiteres möglich, dass die Klemmeinrichtung zwei oder mehr Reibelemente umfasst, die zweckmäßigerweise von gegenüberliegenden Seiten her an die Zugstange anlegbar sind. In diesem Fall heben sich die von den Reibkräften auf die Zugstange ausgeübten Kräfte derart gegenseitig auf, dass die Zugstange nicht einseitig belastet wird.

Vorteilhafterweise steuert die Steuereinrichtung die Klemmeinrichtung derart an, dass die Klemmeinrichtung bei Vorliegen einer in der Deichsel auftretenden Zugkraft oder bei Ausfall von durch die Energierückgewinnungseinrichtung erzeugten Bremskräften deaktiviert ist. Dies bedeutet mit anderen Worten, dass immer dann, wenn entweder keine Bremsung des Fahrzeuganhängers erforderlich ist oder die Rekuperationsbremse ausfällt, sich die Zugstange ohne Blockierung durch die Klemmeinrichtung innerhalb des Deichselgehäuses bewegen kann, so dass die Funktion der Auflaufbremsanlage durch die Klemmeinrichtung nicht beeinträchtigt wird.

Vorzugsweise steuert die Steuereinrichtung die Klemmeinrichtung derart an, dass die Klemmeinrichtung bei Rückwärtsfahrt des Fahrzeuganhängers das Einschieben der Zugstange in das Deichselgehäuse blockiert. Die Klemmeinrichtung stellt auf diese Weise eine einfache Einrichtung dar, mit welcher eine Betätigung der Auflaufbremsanlage bei Rückwärtsfahrt unterdrückt werden kann. Eine Rückwärtsfahrt kann dabei über die Polarität der Elektromotoren/Generatoren oder über zusätzliche Sensoren erkannt werden. Die Rekuperation wird dann deaktiviert. Alternative Einrichtungen zum Ermöglichen der Rückwärtsfahrt ohne Behinderung durch die Auflaufbremsanlage sind ohne weiteres möglich, beispielsweise mechanische Rückfahrautomatiken, bei denen Bremsbacken durch eine spezielle Führung innerhalb einer Trommelbremse von einer sich rückwärts drehenden Bremstrommel wegbewegt werden, oder hydraulische Systeme, bei denen Bremsdruck bei Rückwärtsfahrt durch eine spezielle Schaltung von Ventilen abgelassen bzw. umgeleitet wird.

Die Erfindung wird nachfolgend anhand der Zeichnungen beispielhaft näher erläutert. Es zeigen:
- Figur 1:: eine schematische Darstellung eines erfindungsgemäßen Fahrzeuganhängers von oben mit schematischer Darstellung wesentlicher Komponenten;
- Figur 2:: eine schematische Seitenansicht eines vorderen Abschnitts einer Anhängerdeichsel mit einer erfindungsgemäßen Klemmeinrichtung;
- Figur 3:: einen Querschnitt längs der Linie III-III von Figur 2; und
- Figur 4:: einen Längsschnitt längs der Linie IV-IV von Figur 2.

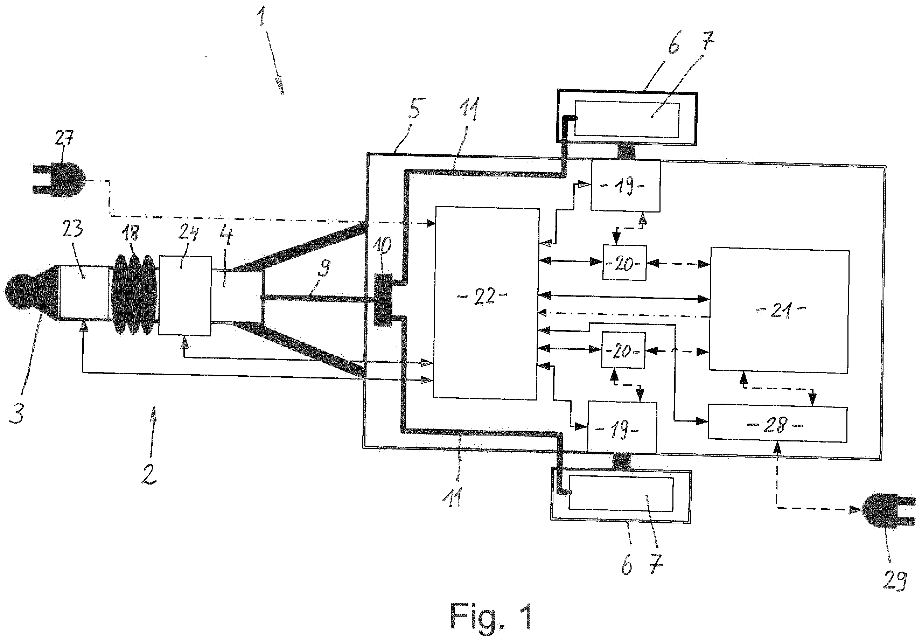

Figur 1 zeigt in schematischer Darstellung eine Draufsicht auf ein Ausführungsbeispiel eines erfindungsgemäßen Fahrzeuganhängers 1. Einzelne Komponenten des Fahrzeuganhängers 1 sind dabei mittels elektrischer Leitungen verbunden, die mit unterschiedlich dargestellten Pfeilen verbunden sind. Pfeile, die mit einer durchgezogenen Linie dargestellt sind, repräsentieren Leitungen für Steuer- und Sensorsignale. Pfeile, die mit einer gestrichelten Linie verbunden sind, repräsentieren Leitungen für eine elektrische Leistungsübertragung. Pfeile, die mit einer strichpunktierten Linie verbunden sind, repräsentieren Leitungen für eine Niedervolt-Energieversorgung.

Der Fahrzeuganhänger 1 umfasst eine Deichsel 2 mit einer Kupplungseinheit 3 und einem Deichselgehäuse 4. Die Kupplungseinheit 3 kann beispielsweise als Kugelkopfkupplung ausgebildet sein und dient zum Ankuppeln des Fahrzeuganhängers 1 an ein nicht dargestelltes Zugfahrzeug. Das Deichselgehäuse 4 ist starr über Deichselarme mit einem Chassis 5 des Fahrzeuganhängers 1 verbunden.

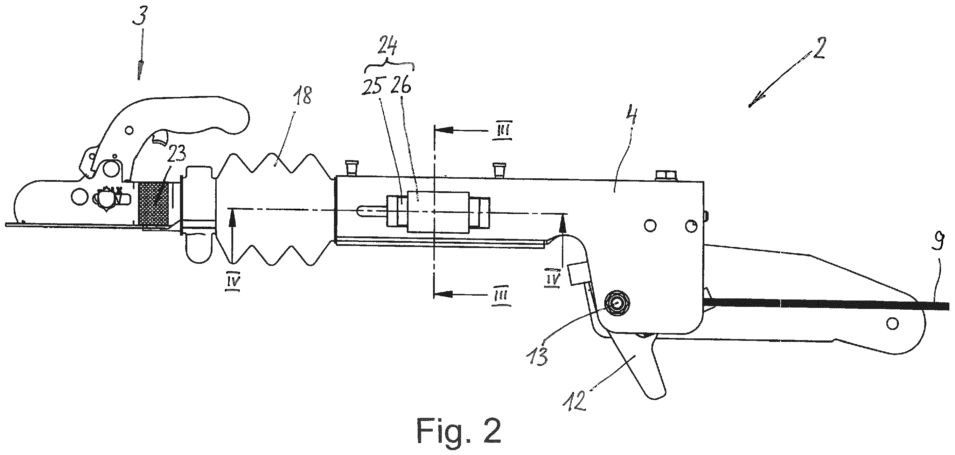

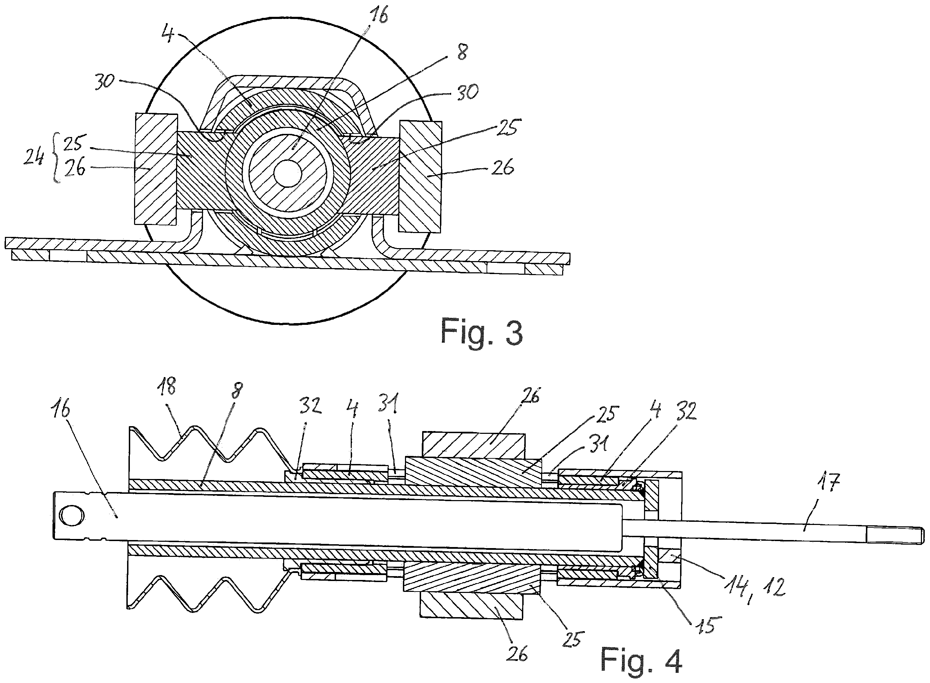

In Figur 1 sind weiterhin Räder 6 mit Radbremsen 7 dargestellt, die als Reibbremsen, beispielsweise Trommelbremsen, ausgebildet sind. Um diese Radbremsen 7 zu betätigen, ist der Fahrzeuganhänger 1 mit einer Auflaufbremsanlage ausgestattet. Diese Auflaufbremsanlage umfasst in bekannter Weise eine in den Figuren 3 und 4 dargestellte Zugstange 8, die längsverschiebbar im Deichselgehäuse 4 angeordnet und fest mit der Kupplungseinheit 3 verbunden ist. Wird das Zugfahrzeug abgebremst, wird die Zugstange 8 aufgrund der auflaufenden trägen Masse des Fahrzeuganhängers 1 in das Deichselgehäuse 4 eingeschoben. Diese Axialbewegung der Zugstange 8 relativ zum Deichselgehäuse 4 wird über eine Kraftübertragungseinrichtung, die im gezeigten Ausführungsbeispiel mechanisch ausgebildet ist und ein Bremsgestänge oder Bremsseil 9, eine Ausgleichswaage 10 und Bremsseile 11 umfasst, zu den Radbremsen 7 übertragen, wodurch diese zugespannt werden. Weiterhin umfasst die Kraftübertragungseinrichtung, wie aus Figur 2 ersichtlich, einen Übersetzungshebel 12, der um eine Schwenkachse 13 schwenkbar im Deichselgehäuse 4 gelagert ist und an dem das vordere Ende des Bremsgestänges oder Bremsseils 9 befestigt ist. Das obere Ende 14 (Figur 4) des Übersetzungshebels 12 wirkt in bekannter Weise mit einer vorderen Stirnplatte 15 der Zugstange 8 derart zusammen, dass eine Längsbewegung der Zugstange 8 innerhalb des Deichselgehäuses 4 eine Schwenkbewegung des Übersetzungshebels 12 verursacht und dadurch das Bremsgestänge oder Bremsseil 9 betätigt.

Die Auflaufbremsanlage umfasst weiterhin eine nicht dargestellte Feststellbremse für die Radbremsen 7. Diese Feststellbremse umfasst in bekannter Weise einen am Deichselgehäuse 4 schwenkbar gelagerten Handbremshebel, der auf die Kraftübertragungseinrichtung einwirken kann, um durch manuelles Betätigen des Handbremshebels die Radbremsen 7 zu betätigen. Vorzugsweise wirkt hierzu ein unterer Fortsatz des Handbremshebels mit dem unteren Ende des Übersetzungshebels 12 derart zusammen, dass dieser durch Betätigen des Handbremshebels geschwenkt werden kann.

Aus den Figuren 3 und 4 ist weiterhin noch ein an sich bekannter Stoßdämpfer 16 ersichtlich, der sich axial durch die rohrförmige Zugstange 8 hindurch erstreckt. Dieser Stoßdämpfer 16 ist mit seinem vorderen Ende fest mit der Kupplungseinheit 3 verbunden, während er mit seinem hinteren Ende, d.h. mit seiner Kolbenstange 17, am Deichselgehäuse 4 abgestützt ist. Dieser Stoßdämpfer 16 dient zur Dämpfung der Axialbewegung zwischen Zugstange 8 und Deichselgehäuse 4.

Die Reibelemente 25 erstrecken sich durch entsprechende seitliche Aussparungen 30 im Deichselgehäuse 4 hindurch und sind in axialer Richtung mittels beidseitiger Stützelemente 31 in axialer Richtung unverschiebbar am Deichselgehäuse 4 abgestützt. Mit dem Bezugszeichen 32 sind Gleithülsen bezeichnet, welche die Zugstange 8 in radialer Richtung innerhalb des rohrförmigen Deichselgehäuses 4 abstützen.

Der Zwischenraum zwischen der Kupplungseinheit 3 und dem Deichselgehäuse 4 ist mittels eines Faltenbalgs 18 vor Schmutz und Nässe geschützt.

Wie aus Figur 1 ersichtlich, weist der Fahrzeuganhänger 1 ferner eine Energierückgewinnungseinrichtung zur Rückgewinnung der durch Bremsen des Fahrzeuganhängers 1 erzeugten Energie und zur Antriebsunterstützung des Fahrzeuganhängers 1 auf. Diese Energierückgewinnungseinrichtung umfasst für jedes Rad 6 eine mit dem Rad 6 in Antriebsverbindung stehende Antriebseinheit 19 in der Form eines Elektromotors, die bzw. der auch als Generator betrieben werden kann. Jede Antriebseinheit 19 ist über eine Leistungselektronik 20 mit einem Energiespeicher 21 des Fahrzeuganhängers 1 verbunden. Der Energiespeicher 21 dient somit zur Speicherung der von den Antriebseinheiten 19 im Generatorbetrieb erzeugten elektrischen Energie. Vorzugsweise handelt es sich beim Energiespeicher 21 um einen Akkumulator. Andere Energiespeicher 21, beispielsweise Superkondensatoren, sind ebenfalls denkbar.

Der Fahrzeuganhänger 1 weist ferner eine elektronische Steuereinrichtung 22 zur Steuerung und Überwachung der Energierückgewinnungseinrichtung auf. Hierzu sind sowohl die Leistungselektroniken 20 als auch die Antriebseinheiten 19 über entsprechende Steuer- und Signalleitungen mit der Steuereinrichtung 22 verbunden.

Im Bereich der Kupplungseinheit 3 ist eine Kraftmesseinrichtung 23 zur Messung der axialen Deichselkräfte, d.h. der Zug- und Schubkräfte vorgesehen. Die Kraftmesseinrichtung 23 kann beispielsweise durch passend angeordnete Dehnmessstreifen realisiert werden, welche die axialen Deichselkräfte in entsprechende elektrische Signale umwandeln. Die Kraftmesseinrichtung 23 ist über eine entsprechende Steuer- und Signalleitung mit der elektronischen Steuereinrichtung 22 verbunden.

Im Bereich des Deichselgehäuses 4 ist weiterhin eine Klemmeinrichtung 24 vorgesehen, mit der das Einschieben der Zugstange 8 in das Deichselgehäuse 4 blockiert oder freigegeben werden kann. Diese Klemmeinrichtung 24 weist, wie in den Figuren 3 und 4 schematisch dargestellt, Reibelemente 25 und eine Krafterzeugungseinheit 26 auf, mit der die Reibelemente 25 seitlich gegen die Zugstange 8 gepresst werden können.

Im gezeigten Ausführungsbeispiel sind zwei Reibelemente 25 vorgesehen, die von gegenüberliegenden Seiten her in Reibkontakt mit der Zugstange 8 gebracht werden können. Es ist jedoch auch ohne weiteres möglich, eine andere Anzahl von Reibelementen 25 zu verwenden, beispielsweise ein Reibelement 25 oder mehr Reibelemente 25. Die Verwendung von zwei gegenüberliegenden Reibelementen 25 hat den Vorteil, dass die Zugstange 8 durch das Anpressen der Reibelemente 25 nicht einseitig belastet wird, da sich die seitlichen Druckkräfte gegenseitig aufheben. Die Krafterzeugungseinheit 26 kann beispielsweise aus zwei Stellzylindern bestehen, die elektrisch, pneumatisch oder hydraulisch betätigt werden und die Reibelemente 25 quer zur Längsrichtung der Zugstange 8 derart bewegen, dass sie in und außer Reibungseingriff mit der Zugstange 8 gebracht werden können.

Die Klemmeinrichtung 24 ist in axialer Richtung der Zugstange 8 am Deichselgehäuse 4 festgelegt. Werden die Reibelemente 25 mittels der Krafterzeugungseinheit 26 mit genügender Kraft gegen die Zugstange 8 gepresst, kann die Zugstange 8 daher bei einem Bremsvorgang des Zugfahrzeugs nicht mehr in das Deichselgehäuse 4 eingeschoben werden, solange die axiale Einschubkraft nicht die Haftreibungskraft zwischen Reibelementen 25 und der Zugstange 8 überschreitet und somit unterhalb eines bestimmten Deichselschubkraftgrenzwertes liegt, bei dem die Haftreibungskraft in Axialrichtung der Zugstange 8 überwunden wird. Unterhalb dieses Deichselschubkraftgrenzwertes ist somit die Betätigung der Radbremsen 7 durch die Auflaufbremsanlage blockiert. Dieser Deichselschubkraftgrenzwert wird zweckmäßigerweise derart gewählt, dass bei leichten und mittelstarken Bremsvorgängen des Zugfahrzeugs keine Betätigung der Radbremsen 7 über die Auflaufbremsanlage erfolgt.

Wird dagegen das Gespann derart abgebremst, dass die axialen Deichselkräfte die maximale Haftreibungskraft zwischen Reibelementen 25 und Zugstange 8 und damit den Deichselschubkraftgrenzwert übersteigen, wird die Zugstange 8 in jedem Fall, d.h. auch bei aktiver, zugespannter Klemmeinrichtung 24 in das Deichselgehäuse 4 eingeschoben, wodurch die Radbremsen 7 betätigt werden.

Die Klemmeinrichtung 24 ist über eine entsprechende Steuer- und Signalleitung mit der elektronischen Steuereinrichtung 22 verbunden. Über die Steuereinrichtung 22 kann die Klemmeinrichtung 24 bzw. dessen Krafterzeugungseinheit 26 aktiviert und deaktiviert und die Höhe der Kraft gesteuert werden, mit der die Reibelemente 25 gegen die Zugstange 8 gepresst werden. Mit Hilfe der Steuereinrichtung 22 kann somit auch der Deichselschubkraftgrenzwert eingestellt und verändert werden, ab dem die Zugstange 8 durch die Klemmeinrichtung 24 hindurchzurutschen beginnt. Zweckmäßigerweise wird der Deichselschubkraftgrenzwert derart eingestellt, dass er bei 1 bis 6%, insbesondere 2 bis 4%, des Gewichts des Fahrzeuganhängers 1 liegt.

Wie aus Figur 1 weiter ersichtlich, kann das elektrische System des Fahrzeuganhängers 1 und insbesondere die Steuereinrichtung 22 mittels einer elektrischen Leitung und eines Steckers 27 mit einer nicht dargestellten Energieversorgung des Zugfahrzeugs verbunden werden. Weiterhin kann der Fahrzeuganhänger 1 auch ein Ladegerät 28 aufweisen, das mittels einer Leitung und eines Steckers 29 an eine externe Energieversorgungseinrichtung angeschlossen und von der Steuereinrichtung 22 derart angesteuert werden kann, dass es den Energiespeicher 21 über die externe Energieversorgungseinrichtung lädt.

Die Funktion des beschriebenen Brems- und Energierückgewinnungssystems ist folgende:
Solange der Fahrzeuganhänger 1 gezogen wird und die Kraftmesseinrichtung 23 der Steuereinrichtung 22 eine Zugkraft in der Deichsel 2 meldet, ist die Klemmeinrichtung 24 deaktiviert. Erkennt die Kraftmesseinrichtung 23 jedoch bei Vorwärtsfahrt eine Schubkraft, insbesondere eine Schubkraft, die unterhalb eines vorbestimmten Deichselschubkraftgrenzwertes von beispielsweise 2 bis 4% des Anhängergewichtes liegt, erhält die Klemmeinrichtung 24 von der Steuereinrichtung 22 ein Signal zum Blockieren der Zugstange 8. Die Krafterzeugungseinheit 26 presst daraufhin die Reibelemente 25 gegen die Zugstange 8. Dies verhindert ein Zuspannen der Radbremsen 7 über die Auflaufbremsanlage bei kleinen und mittelstarken Bremsvorgängen des Zugfahrzeugs.

Gleichzeitig wird die Energierückgewinnungseinrichtung von der Steuereinrichtung 22 auf Generatorbetrieb geschaltet. Die Antriebseinheiten 19 wirken als Generatoren, welche den Energiespeicher 21 aufladen und gleichzeitig Bremskräfte erzeugen, die auf die Räder 6 wirken. Der Fahrzeuganhänger 1 wird somit bei kleinen und mittelstarken Bremsvorgängen allein mittels des rekuperativen Bremssystems abgebremst.

Sind beim Bremsen des Zugfahrzeugs die Auflaufkräfte so stark, dass die Haftreibung der Klemmeinrichtung 24 und damit der Deichselschubkraftgrenzwert überschritten wird, werden über die Auflaufbremsanlage zusätzlich die Radbremsen 7 zugespannt. In dieser Situation wird der Fahrzeuganhänger 1 sowohl über das rekuperative Bremssystem als auch über die Auflaufbremsanlage abgebremst.

Fällt das elektrische rekuperative Bremssystem aus oder wird dieses abgeschaltet, wird die Klemmeinrichtung 24 von der Steuereinrichtung 22 automatisch deaktiviert, wodurch der Reibeingriff der Reibelemente 25 aufgehoben wird und die Auflaufbremsanlage die Bremsung des Fahrzeuganhängers 1 allein und ohne Abschwächung durch die Klemmeinrichtung 24 übernehmen kann.

Die Kombination des rekuperativen Bremssystems und der Auflaufbremsanlage kann vorteilhafterweise auch für ein Antischlingersystem verwendet werden. Hierzu kann das rekuperative Bremssystem über die Steuereinrichtung 22 gezielt zugeschaltet werden, um das Gespann im Fall von Schlingerbewegungen des Fahrzeuganhängers 1 zu strecken und den Schlingerbewegungen entgegenzuwirken. Wenn, wie im Ausführungsbeispiel gezeigt, links- und rechtsseitig getrennte Antriebseinheiten 19 bzw. Generatoren vorgesehen sind, die als elektrische Bremsen wirken können, ist es auch möglich, die links- und rechtsseitigen Räder 6 gezielt und unterschiedlich über die Antriebseinheiten 19 abzubremsen, um einem Schlingern des Fahrzeuganhängers 1 entgegenzuwirken.

Für eine Rückwärtsfahrt des Fahrzeuganhängers 1 ist es erforderlich, sowohl das rekuperative Bremssystem als auch die Auflaufbremsanlage zu deaktivieren. Eine Rückwärtsfahrt kann über die Polarität der Antriebseinheiten (Generatoren) 19 oder über zusätzliche Sensoren erkannt und der Steuereinrichtung 22 gemeldet werden. Die Steuereinrichtung 22 deaktiviert daraufhin die Energierückgewinnungseinrichtung derart, dass auf die Räder 6 keine rekuperativen Bremskräfte mehr einwirken. Sofern die Radbremsen 7 mit einer Rückfahrautomatik ausgerüstet sind, die bei einer Rückwärtsbewegung die Bremsbeläge von der Bremstrommel löst bzw. deren Anpressdruck zumindest weitgehend aufhebt, kann der Fahrzeuganhänger 1 dann frei zurückgeschoben werden. Bei Radbremsen 7 ohne Rückfahrautomatik (z. B. Scheibenbremsen) muss die Auflaufbremseinrichtung über andere, insbesondere in der Kraftübertragungseinrichtung vorhandene Mittel deaktiviert werden.

Alternativ kann die Auflaufbremseinrichtung bei Rückwärtsfahrt auch dadurch deaktiviert werden, dass die Klemmeinrichtung 24 mit voller Stärke aktiviert wird, so dass das Einschieben der Zugstange 8 in das Deichselgehäuse 4 blockiert wird. Alternativ könnte das Einschieben der Zugstange 8 in das Deichselgehäuse 4 auch durch andere Sperrelemente blockiert werden.

## Patentansprüche

1. Fahrzeuganhänger mit
- einer Deichsel (2), die ein Deichselgehäuse (4) und eine Zugstange (8) aufweist,
- einer Energierückgewinnungseinrichtung zur Rückgewinnung von durch Bremsen des Fahrzeuganhängers (1) erzeugter Energie,
- einer elektronischen Steuereinrichtung (22) zur Steuerung der Energierückgewinnungseinrichtung,
- einem Bremssystem mit einer Auflaufbremsanlage, bei welcher die Zugstange (8) in das Deichselgehäuse (4) einschiebbar ist,
- einer an der Deichsel (2) vorgesehenen und mit der Steuereinrichtung (22) in elektrischer Verbindung stehenden Kraftmesseinrichtung (23) zur Messung der axialen Deichselkräfte,
**dadurch gekennzeichnet, dass** eine mit der Zugstange (8) zusammenwirkende Klemmeinrichtung (24) vorgesehen ist, die bei Vorwärtsfahrt des Fahrzeuganhängers (1) das Einschieben der Zugstange (8) in das Deichselgehäuse (4) bei einer Deichselschubkraft unterhalb eines bestimmten Deichselschubkraftgrenzwertes blockiert und oberhalb dieses Deichselschubkraftgrenzwertes ermöglicht.

2. Fahrzeuganhänger nach Anspruch 1, **dadurch gekennzeichnet, dass** der Deichselschubkraftgrenzwert bei einer Deichselschubkraft liegt, die 2 bis 4% der Gewichtskraft des Fahrzeuganhängers (1) entspricht.

3. Fahrzeuganhänger nach Anspruch 1 oder 2, **dadurch gekennzeichnet, dass** die Klemmeinrichtung (24) derart ausgebildet und mit der Zugstange (8) in Reibungseingriff ist, dass unterhalb des Deichselschubkraftgrenzwertes ein Einschieben der Zugstange (8) in das Deichselgehäuse (4) aufgrund der Haftreibung zwischen mindestens einem Reibelement (25) und der Zugstange (8) blockiert ist, während bei Überschreiten des Deichselschubkraftgrenzwertes das Einschieben der Zugstange (8) in das Deichselgehäuse (4) durch Überwinden der Haftreibung ermöglicht wird.

4. Fahrzeuganhänger nach einem der vorhergehenden Ansprüche, **dadurch gekennzeichnet, dass** die Klemmeinrichtung (24) mindestens ein Reibelement (25), das in axialer Richtung der Zugstange (8) am Deichselgehäuse (4) abgestützt ist, und eine Krafterzeugungseinheit (26) umfasst, mit der das Reibelement (25) in Reibkontakt mit der Zugstange (8) bringbar ist.

5. Fahrzeuganhänger nach einem der vorhergehenden Ansprüche, **dadurch gekennzeichnet, dass** die Klemmeinrichtung (24) zwei Reibelemente (25) umfasst, die von gegenüberliegenden Seiten her an die Zugstange (8) andrückbar sind.

6. Fahrzeuganhänger nach einem der vorhergehenden Ansprüche, **dadurch gekennzeichnet, dass** die Steuereinrichtung (22) die Klemmeinrichtung (24) derart ansteuert, dass die Klemmeinrichtung (24) bei Vorliegen einer in der Deichsel (2) auftretenden Zugkraft oder bei Ausfall von durch die Energierückgewinnungseinrichtung erzeugten Bremskräften deaktiviert ist.

7. Fahrzeuganhänger nach einem der vorhergehenden Ansprüche, **dadurch gekennzeichnet, dass** die Steuereinrichtung (22) die Klemmeinrichtung (24) derart ansteuert, dass die Klemmeinrichtung (24) bei Rückwärtsfahrt des Fahrzeuganhängers (1) das Einschieben der Zugstange (8) in das Deichselgehäuse (4) blockiert.

## Claims

1. Vehicle trailer comprising
- a drawbar (2) which has a drawbar housing (4) and a pull rod (8),
- an energy recovery device for recovering energy generated by braking the vehicle trailer (1),
- an electronic control device (22) for controlling the energy recovery device,
- a brake system having an overrun brake in which the pull rod (8) can be inserted into the drawbar housing (4),
- a force measuring device (23) which is provided on the drawbar (2) and is in electrical connection with the control device (22) for measuring the axial drawbar forces, **characterised in that** a clamping device (24) is provided which interacts with the pull rod (8) and, when the vehicle trailer (1) is travelling forwards, blocks the insertion of the pull rod (8) into the drawbar housing (4) when a drawbar pushing force is below a particular drawbar pushing force limit, and makes said insertion possible when said force is above said drawbar pushing force limit.

2. Vehicle trailer according to claim 1, **characterised in that** the drawbar pushing force limit is a drawbar pushing force which corresponds to 2 to 4% of the weight of the vehicle trailer (1).

3. Vehicle trailer according to either claim 1 or 2, **characterised in that** the clamping device (24) is designed and is in frictional engagement with the pull rod (8) in such a way that, below the drawbar pushing force limit, an insertion of the pull rod (8) into the drawbar housing (4) is blocked owing to the static friction between at least one friction element (25) and the pull rod (8), while, when the drawbar pushing force limit is exceeded, the insertion of the pull rod (8) into the drawbar housing (4) is made possible by overcoming the static friction.

4. Vehicle trailer according to any of the preceding claims, **characterised in that** the clamping device (24) comprises at least one friction element (25) which is supported on the drawbar housing (4) in the axial direction of the pull rod (8), and a force generating unit (26) by means of which the friction element (25) can be brought into frictional contact with the pull rod (8).

5. Vehicle trailer according to any of the preceding claims, **characterised in that** the clamping device (24) comprises two friction elements (25) which can be pressed onto the pull rod (8) from opposite sides.

6. Vehicle trailer according to any of the preceding claims, **characterised in that** the control device (22) controls the clamping device (24) in such a way that the clamping device (24) is deactivated when a pulling force occurs in the drawbar (2) or when braking forces generated by the energy recovery device are lost.

7. Vehicle trailer according to any of the preceding claims, **characterised in that** the control device (22) controls the clamping device (24) in such a way that the clamping device (24) blocks the insertion of the pull rod (8) into the drawbar housing (4) when the vehicle trailer (1) is travelling backwards.

## Revendications

1. Remorque de véhicule, comportant :
- un timon (2) qui comprend un boîtier de timon (4) et une barre de traction (8),
- un moyen de récupération d'énergie pour récupérer de l'énergie générée par freinage de la remorque de véhicule (1),
- un moyen de commande électronique (22) pour commander le moyen de récupération d'énergie,
- un système de frein ayant un ensemble de frein à inertie dans lequel la barre de traction (8) est susceptible d'être insérée dans le boîtier de timon (4),
- un moyen de mesure de force (23) destiné à mesurer les forces axiales du timon et prévu sur le timon en étant en connexion électrique avec le moyen de commande (22),
**caractérisée en ce que**
il est prévu un moyen de coincement (24) coopérant avec la barre de traction (8), qui, lors d'une marche avant de la remorque de véhicule (1), bloque l'insertion de la barre de traction (8) dans le boîtier de timon (4) lors d'une force de poussée de timon inférieure à une valeur limite déterminée de la force de poussée de timon, et la permet lors d'une force de poussée de timon supérieure à ladite valeur limite.

2. Remorque de véhicule selon la revendication 1,
**caractérisée en ce que**
la valeur limite de la force de poussée de timon est au niveau d'une force de poussée de timon qui correspond à 2 à 4 % de la force pondérale de la remorque de véhicule (1).

3. Remorque de véhicule selon la revendication 1 ou 2,
**caractérisée en ce que**
le moyen de coincement (24) est réalisé et en engagement de friction avec la barre de traction (8) de telle sorte qu'au-dessous de la valeur limite de la force de poussée de timon, une insertion de la barre de traction (8) dans le boîtier de timon (4) est bloquée en raison de la friction par adhérence entre au moins un élément de friction (25) et la barre de traction (8), tandis que lors d'un dépassement de la valeur limite de la force de poussée de timon, l'insertion de la barre de traction (8) dans le boîtier de timon (4) est possible en surmontant de la friction par adhérence.

4. Remorque de véhicule selon l'une des revendications précédentes,
**caractérisée en ce que**
le moyen de coincement (24) comprend au moins un élément de friction (25) qui est soutenu sur le boîtier de timon (4) en direction axiale de la barre de traction (8), ainsi qu'une unité de génération de force (26) permettant d'amener l'élément de friction (25) en contact de friction avec la barre de traction (8).

5. Remorque de véhicule selon l'une des revendications précédentes,
**caractérisée en ce que**
le moyen de coincement (24) comprend deux éléments de friction (25) susceptibles d'être pressés contre la barre de traction (8) depuis des côtés opposés.

6. Remorque de véhicule selon l'une des revendications précédentes,
**caractérisée en ce que**
le moyen de commande (22) pilote le moyen de coincement (24) de telle sorte que le moyen de coincement (24) est désactivé en présence d'une force de traction apparaissant dans le timon (2) ou en cas de défaillance de forces de freinage générées par le moyen de récupération d'énergie.

7. Remorque de véhicule selon l'une des revendications précédentes,
**caractérisée en ce que**
le moyen de commande (22) pilote le moyen de coincement (24) de telle sorte que le moyen de coincement (24) bloque l'insertion de la barre de traction (8) dans le boîtier de timon (4) lors d'une marche arrière de la remorque de véhicule (1).
